# EUROPÄISCHE PATENTSCHRIFT

(11) **EP 1 053 959 B1**
(45) Veröffentlichungstag und Bekanntmachung des Hinweises auf die Patenterteilung: **26.11.2003**
(21) Anmeldenummer: 00105257.0
(22) Anmeldetag: 14.03.2000
(51) Int. Cl.: B65G 65/44, B65G 65/40, B65G 65/48

(54) **Austrageeinheit für Schüttgutbunker**
Discharging unit for bulk bunker
Unité de déchargement pour trémie pour matières en vrac

(30) Priorität: 20.03.1999 DE 19912689
(43) Veröffentlichungstag der Anmeldung: 22.11.2000
(73) Patentinhaber: Schwäbische Hüttenwerke GmbH, 73433 Aalen-Wasseralfingen (DE)
(72) Erfinder: Schröder, Klaus-Sweerich, 73431 Aalen (DE)
(74) Vertreter: Zirkel, Herbert

(56) Entgegenhaltungen:
- DE-A- 2 400 547
- DE-A- 3 511 177
- US-A- 3 874 566
- US-A- 5 407 103

## Beschreibung

Es ist seit längerem üblich, Schüttgüter, die für die Weiterverarbeitung in kontinuierlich arbeitenden Anlagen, wie z.B. Späne für die Spanplattenherstellung, Müll für Pyrolyseverschwelung, Industriegips für Gipsplattenerzeugung, Späne für die Zellulose- oder Papierproduktion, aber auch Schlämme aus Abwasseranlagen für die Vorbereitung zur Trocknung oder die Kompostierung, in Silos oder Bunkem zwischenzulagern. Dies macht es möglich, von diskontinuierlichem Antransport, z.B. durch Lkw's, bei der Schiffsentladung oder, z.B. bei Schlämmen, der Entleerung von Filterpressen, auf kontinuierliche Zuführung zu den Weiterverarbeitungsstellen überzugehen. Voraussetzung dazu ist, dass die Schüttgüter auch kontinuierlich aus den Silos oder Bunkern abgezogen und entsprechenden Transporteinheiten, wie z.B. Schneckenförderern, Becherwerken oder Bandförderern, zugeführt werden können. Dies erfordert einerseits, dass die Schüttgüter in den Zwischenlagern, den Silos oder Bunkern, nicht verdichten und insbesondere keine Brücken bilden, wodurch der Ausfluss verzögert würde oder gar völlig zum Erliegen käme. Hierfür liegen geeignete Entwicklungen vor, die nicht Gegenstand der vorliegenden Erfindung sind. U.U. kann entsprechenden Störungen des Durchflusses auch durch die Wahl der Form des Bunkers oder Silos vorgebeugt werden.

Andererseits erfordert die kontinuierliche Zuführung zu den Abfördergeräten ebenso kontinuierlich arbeitende Entnahmegeräte im Silo oder Bunker. Je nach Form des Silos oder Bunkers kommen hierbei unterschiedliche Gerätearten zum Einsatz (siehe z.B. das Dokument US-A-5 407 103), nämlich Rüttelvorrichtungen, Rotationsräder mit daran angebrachten federnden oder starren Räumarmen und schließlich Gleitrahmen. Mit einer Verbesserung der letztgenannten Systeme befasst sich die vorliegende Erfindung.

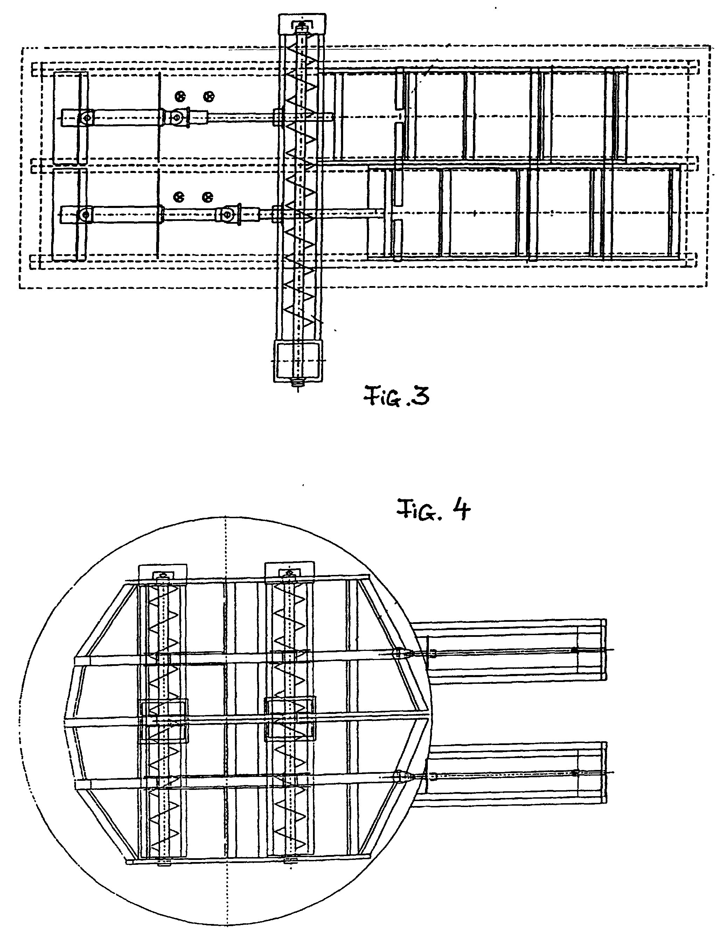

Gleitrahmen sind auf dem Boden des Silos oder Bunkers aufliegende starre, vorzugsweise aus Metall gebildete Rahmen, die von einer Rahmenseite zur anderen verlaufende keilförmige oder rechteckige Quersprossen aufweisen. Bei keilförmigen Quersprossen weist die Frontseite, d.h. die senkrechte oder nahezu senkrecht verlaufende Wand des Keils, in die Richtung, in die das zu fördende Schüttgut bewegt werden soll. Wird der Gleitrahmen durch mechanische oder hydraulische Mittel hin und zurückbewegt, schiebt er sich bei der Hinbewegung mit der flachen Seite der Keilsprossen unter das Schüttgut und nimmt dieses bei der Zurückbewegung in Förderrichtung mit. Auf diese Weise ist es möglich, selbst flachste Silos oder Bunker oder auch Restmengen in Hochsilos oder Bunkern auszutragen, was mit anderen Austrageeinheiten nicht immer ohne weiteres möglich ist. Gleitrahmen eignen sich auch als Austrageeinheiten in befahrbaren Silos oder Bunkern, weil sie es erlauben, dass beim Befüllen des Silos oder Bunkers Transportfahrzeuge über sie hinwegfahren, ohne ihre Funktion zu beeinträchtigen. Sie wurden deshalb zunächst vorzugsweise in s.g. Annahmestationen eingesetzt, in denen das Schüttgut erstmals in eine kontinuierliche Verarbeitungskette aufzunehmen ist. Ein entsprechendes Gleitrahmensystem ist prinzipiell dargestellt in Figur 3. Es zeigt zwei parallel nebeneinander verlaufende Gleitrahmen, die abwechselnd durch hydraulische Schub-Zug-Systeme vor- und zurückbewegt werden und das Schüttgut in den querliegenden Schneckenförderer schieben.

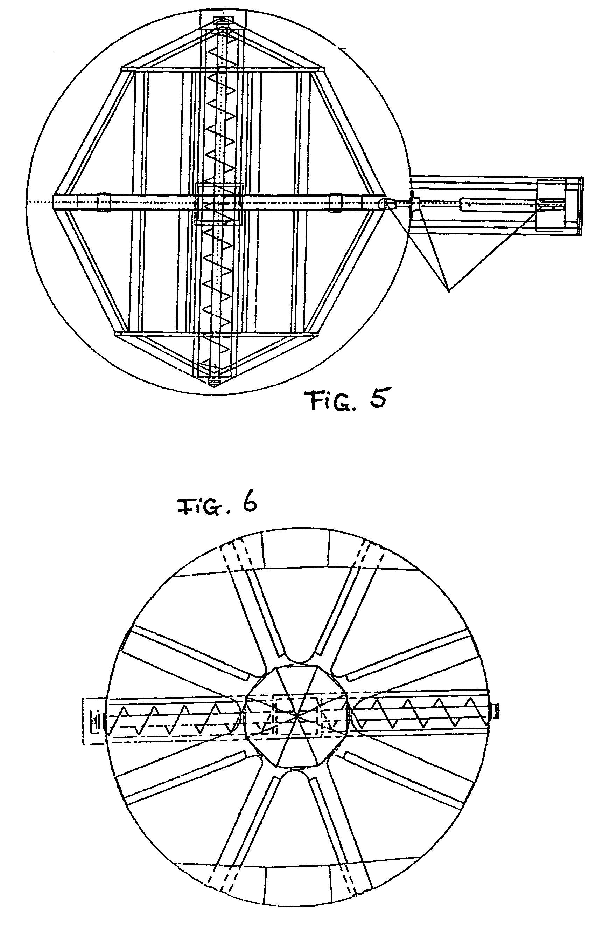

Im Laufe der Zeit hat sich gezeigt, dass Gleitrahmen auch günstige Austragevorrichtungen sind für Hochsilos oder Bunker, wenn sie deren gesamte Bodenfläche oder doch wenigstens wesentliche Teile davon räumen können. Zwei entsprechende Systeme sind dargestellt in den Figuren 4 und 5. Figur 4 stellt ein System dar, welches im Prinzip dem der Figur 3 entspricht. Zwei parallel zueinander laufende Gleitrahmen werden auf dem Siloboden vor- und zurückbewegt und fördern das Schüttgut in die quer darunterliegenden Schneckenförderer. Es ist ersichtlich, dass sich wegen der Bewegung der Rahmen zwangsläufig unberührt bleibende Seitenflächen bilden müssen, aus denen eine Abförderung nicht stattfindet.

Die Ausführung in Figur 5 versucht diesen Nachteil teilweise dadurch zu beseitigen, dass ein einzelner Gleitrahmen polygonal begrenzt sich auch in die seitlich liegenden Bereiche des Rundsilos erstreckt Dennoch ist auch hier eine volle Abförderung des im Silo befindlichen Schüttgutes nicht möglich.

Es sind deshalb auch Systeme entwickelt worden, bei denen die Gleitrahmen über die Grundfläche des Silos hinausreichen und sich deshalb auch teilweise außerhalb des Silomantels bewegen. Es kann zwar so die gesamte Fläche des Silos von der Transportbewegung erfasst werden, es stellen sich aber Probleme der Abdichtung an den Stellen, an denen der Gleitrahmen durch einen Schlitz in der Silowandung geführt werden muss.

In einem weiteren Versuch, das Gleitrahmensystem für Hochsilos nutzbar zu machen, wurden deshalb Drehräder entwickelt, die, anders als kontinuierlich drehende Austrageinheiten mit Förderarmen, nur oszyllierende Bewegungen vollführen. Ein entsprechendes System ist in der Draufsicht in Figur 6 dargestellt. Das Drehrad wird dort durch eine entsprechende Antriebseinheit jeweils um eine bestimmte Gradzahl verdreht und anschließend um die gleiche Gradzahl wieder zurückgedreht. Die Drehradarme sind, wie die Quersprossen in Gleitrahmen, keilförmig ausgestaltet, sodass sie sich bei der Vorwärtsdrehung unter das Schüttgut schieben und bei der Rückwärtsdrehung das Schüttgut mitnehmen bzw. umgekehrt, in Richtung auf die unter dem Siloboden angeordnete Schneckenfördereinheit. Der Vorteil einer derartigen Ausführung liegt darin, dass Rundsilos bis zur Begrenzungswand geräumt werden können. Ein Nachteil besteht darin, dass das System für Silos oder Bunker mit rechteckigem Querschnitt nicht brauchbar ist Auch muss die Konstruktion im Ganzen wegen der an den Armen angreifenden Kräfte sehr massiv und damit auch kostenaufwendig gestaltet werden.

Die vorliegende Erfindung behandelt gegenüber den vorstehend beschriebenen Ausführungen eine Gleitrahmeneinheit, die vorzugsweise für die Räumung von Silos oder Bunkern mit rechteckigem Querschnitt gedacht ist, bei entsprechender Gestalt aber auch für Rundsilos verwendbar ist. Mit ihr soll, bei einfachem konstruktivem Aufbau des Gleitrahmens, eine nahezu vollständige Räumung eines rechteckigen Bunkers erreicht werden, mittels eines einzigen einfach zu gestaltenden Antriebs und mit der Möglichkeit, zur Vergrößerung der Austragemenge oder Beschickung verschiedener Abnehmereinheiten das Schüttgut in mehrere, bis zu vier, Abfördereinheiten zu bewegen. Diese Aufgabe wird dadurch gelöst, dass ein Gleitrahmen auf dem Bunkerboden verschoben wird mittels eines unterhalb des Silos oder Bunkers zentral angeordneten Motors mit darauf angebrachter Antriebsscheibe und darauf exzentrisch befestigtem Antriebsbolzen, der in ein mittig angeordnetes Lager in einer mittleren Sprosse des Gleitrahmens hineinragt. Er wird dabei sowohl in Längs- als auch in Querrichtung des Bunkers verschoben und kann auf diese Weise nacheinander zu allen vier Bunkerwänden geführt werden. Abfördereinheiten, wie z.B. Schneckenförderer, lassen sich entweder an allen Bunkerwänden oder auch unterhalb des Silos oder Bunkerbodens anbringen. Aufgrund der Bewegung des Rahmens ist eine Zuführung zu bis zu vier derartigen Abfördereinheiten möglich. Die Bewegung des Rahmens kann erzeugt werden durch einen unterhalb des Silos oder Bunkers angeordneten Elektro- oder Hydraulikmotor, der kontinuierlich drehend arbeiten kann und nicht oszyllierend geschaltet werden muss. Damit sind aufwendige Umsteuereinrichtungen ebenso entbehrlich wie entsprechende konstruktive Gestaltungen, die die sonst regelmäßig wechselnden Lastaufnahmen zu berücksichtigen hätten. Die Umwandlung der Drehbewegung des Antriebsmotors in eine Taumelbewegung erfolgt durch die exzentrische Anbindung des Gleitrahmens an einer auf dem Motor befestigten Antriebsscheibe, wobei die Exzentrizität unter Berücksichtigung der Größe des Gleitrahmens so gewählt wird, dass der Gleitrahmen bei Drehung der Antriebsscheibe nacheinander den Wänden des Silos oder Bunkers bis auf einen Zwischenraum nahekommt, der möglichst klein, aber so groß zu wählen ist, dass das Schüttgut zwischen Rahmen und Silowand nicht verpresst werden kann.

Es hat sich gezeigt, dass trotz kreisender Bewegung des Gleitrahmens im Ganzen dessen Kanten weitgehend parallel zu den Silowänden bleiben. Wegen der Aufhängung des Rahmens an einem Bolzen, der auf der Antriebscheibe angeordnet ist, ist es nicht auszuschließen, dass der Rahmen gegenüber den Wänden des Silos oder Bunkers verdreht wird. Dies kann toleriert werden, wenn die Ecken des Rahmens mit einem sinnvollen Radius abgerundet sind und die Kraft, die von dem Bolzen auf der Antriebsscheibe auf den Rahmen wirkt, eine Richtung aufweist, die den Rahmen weiter an der Wand entlangschiebt. Der Kraftvektor muss deshalb stets auf einen Punkt der Silo- oder Bunkerwand weisen, der, in Bewegungsrichtung gesehen, hinter der Stelle liegt, an der sich der Rahmen und die Wand berühren können.

Hieraus ergeben sich folgende Parameter für die Geometrie des Silos oder Bunkers und des Gleitrahmens:
a) Das Verhältnis von Länge zu Breite des Rahmens soll 1,4 nicht überschreiten.
b) Der Abstand, der bei paralleler Lage von Kante des Gleitrahmens und Wand des Silos oder Bunkers zueinander verbleibt, soll nicht geringer sein als 50 mm.
c) Der Radius der Rahmenecken soll einerseits nicht zu klein sein, damit stets noch ein Abrollen des Rahmens an der Wand möglich bleibt, andererseits nicht zu groß, damit die vom Exzenterbolzen auf der Antriebscheibe ausgehende Kraft stets hinter dem Ende der Rundung wirkt. Vorzugsweise liegt, abhängig von der Gesamtgröße des Rahmens, der Radius zwischen 50 und 160 mm.
d) Es ist eine Abstimmung zwischen dem Abstand der Quersprossen des Rahmens und dem Umlaufradius des Exzenterbolzens auf der Antriebscheibe zu finden, der entsprechend den Schüttgutparametern des zu fördenden Schüttgutes eine Brückenbildung zwischen den Quersprossen vermeidet.

Als Sicherheitsmaßnahme für den Fall, dass trotz aller konstruktiven Vorkehrung der Rahmen durch Verkanten im Silo oder Bunker blockiert wird, kann vorgesehen werden, dass der Antrieb bei Überschreiten einer bestimmten Gegenkraft reversiert wird. Dies kann z.B. in der Weise geschehen, dass die Umkehrung der Drehrichtung des Antriebsmotors dann geschaltet wird, wenn ein bestimmter Stromsollwert überschritten ist.

In der Praxis hat sich gezeigt, dass wegen der im Stahlbau zwangsläufig vorgegebenen relativ groben Toleranzen eine völlige Parallelität und Rechtwinkligkeit im Verhältnis zwischen dem Gleitrahmen und der starr auf der Achse des Antriebsmotors oder eines Zwischengetriebes angeodneten Antriebsscheibe nicht einzuhalten ist. Die Lagerung des Gleitrahmens auf dem Exzenterbolzen auf der Antriebsscheibe muss deshalb so gestaltet sein, dass sowohl axialer als auch Winkelversatz unschädlich aufgenommen werden können. Hierfür kann ein bekanntes CARB-Lager Verwendung finden, welches beide Abweichungen kompensiert.

Die vorstehend beschriebene Ausführung ist nicht beschränkt auf Silos oder Bunker mit rechteckigem Querschnitt. Bei Rundbunkern ist die gleichartige Wirkung eines Gleitrahmens ebenfalls zu erreichen, wenn der Gleitrahmen kreisförmige Gestalt hat und sichergestellt ist, dass der notwendige Mindestabstand zwischen dem Rand des Gleitrahmens und der Wand des Silos oder Bunkers eingehalten wird, der das Verquetschen des Schüttguts vermeidet. Besondere Maßnahmen, die das Verdrehen des Gleitrahmens auf dem antreibenden Exzenterbolzen verhindern sollen, sind in diesem Fall nicht erforderlich, da ein Verkanten des Gleitrahmens gegenüber der Wand des Silos oder Bunkers ausgeschlossen ist.

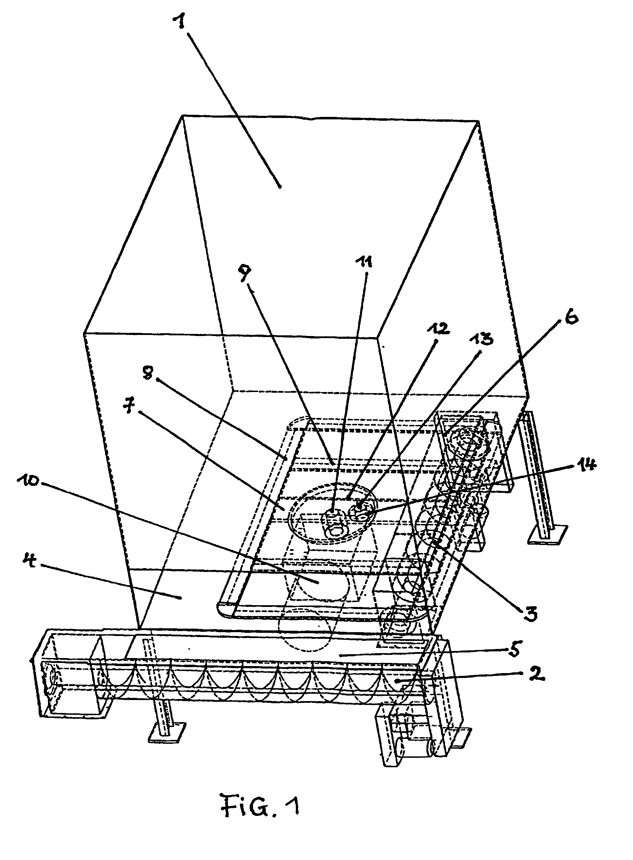

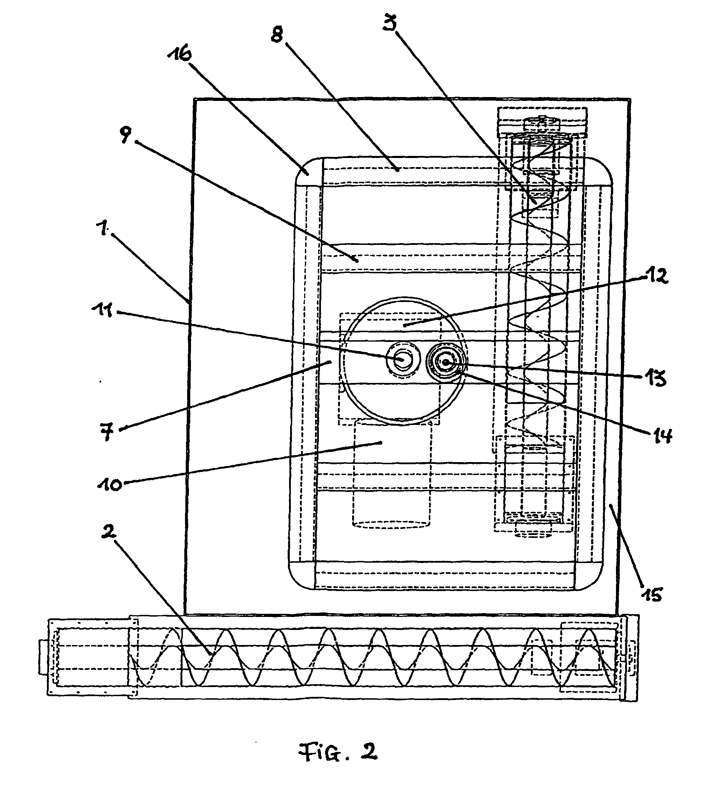

Eine erfindungsgemäße Ausführung eines Gleitrahmensystems soll anhand der Figuren 1 und 2 im folgenden beschrieben werden. Dabei zeigt Figur 1 eine isometrische Darstellung eines entsprechenden quadratischen Bunkers mit darin eingebautem erfindungsgemäßem Gleitrahmensystem, Figur 2 die Draufsicht auf den Gleitrahmen und die darunterliegende Bunkerbodenfläche.

In beiden Figuren ist ein Silo oder Bunker (1) von rechteckiger Form gezeigt, der an seinem unteren Boden zwei Transportschnecken (2) und (3) aufweist, mit denen ausgetragenes Schüttgut abgefördert werden kann. Die eine befindet sich außerhalb des Bunkers, die zweite unterhalb seines Bodens. Bei der ersten (2) wird das Schüttgut durch eine Öffnung (4) in der nächstliegenden Bunkerwand und eine Öffnung (5) in der Abdeckung der Förderschnecke in diese befördert. Bei der unter dem Boden angeordneten Förderschnecke (3) fällt das Schüttgut durch eine Öffnung des Bodens (6) direkt in den die Schnecke umgebenden Trog.

Auf dem Boden des Silos oder Bunkers aufliegend befindet sich der Gleitrahmen (7), bestehend aus vier äußeren Rahmenbegrenzungen (8) und dazwischenliegenden Quersprossen (9), die parallel zu einer Rahmenseite verlaufen. Die Quersprossen (9) können keilförmigen oder rechteckigen Querschnitt haben. Gleiches gilt für die äußeren Rahmenteile (8), die gleichfalls bei der Förderung des Schüttguts mitwirken.

Unterhalb der Mitte des Bunkers befindet sich eine -im Einzelnen nicht näher dargestellte- Antriebseinheit (10), die, auf einer durch den Bunkerboden hindurch reichenden Achse (11), eine innerhalb des Bunkers angeordnete Antriebsscheibe (12) trägt. Diese wiederum weist einen gegenüber dem Zentrum seitlich versetzten Antriebsbolzen (13) auf, der in eine der Quersprossen (9) des Gleitrahmens (7) hineinragt. Der Gleitrahmen (7) ist an dieser Stelle auf dem Bolzen (13) mittels eines Lagers (14) befestigt, das die Drehung des Gleitrahmens (7) um den Bolzen (13) ermöglicht. Wird die Antriebsscheibe (12) in Bewegung versetzt, nimmt sie über den Antriebsbolzen (13) den Gleitrahmen (7) mit. Da der Antriebsbolzen (13) in einem Kreis um die Antriebsachse (11) der Antriebseinheit (10) umläuft, beschreibt der Gleitrahmen (7) mit allen seinen Begrenzungen und Kanten ebenfalls eine kreisförmige Bewegung im Silo oder Bunker (1), die deshalb möglich ist, weil die von dem Gleitrahmen (7) überdeckte Fläche kleiner ist als die Grundfläche des Silos oder Bunkers (1 ), und zwar so klein, dass auch bei äußerster Annäherung einer Kante des Gleitrahmens an eine benachbarte Bunkerwand zwischen dieser Kante und der Wand noch ein, wenn auch geringes, Abstandsmaß (15) verbleibt.

Zur Vermeidung schädigender Berührungen zwischen den Ecken des Gleitrahmens (7) und den Wandungen des Silos oder Bunkers (1) im Falle, dass sich der Gleitrahmen aus der parallelen Lage zu den Wänden verdreht, sind die Ecken (16) des Gleitrahmens (7) abgerundet mit einem Radius, der ausreichend groß ist, um ein Abrollen des Gleitrahmens (7) an der Wand des Silos oder Bunkers (1) im Berührungsfalle zu ermöglichen.

Auf die Darstellung eines Rundbunkers mit entsprechend gestaltetem kreisförmigem Gleitrahmen ist verzichtet worden, weil sich diese Konstruktion für den Fachmann ohne weiteres ergibt. Es ist ebenso naheliegend, dass anstelle der beiden gezeichneten Förderschnecken (2) und (3) für den Abtransport des ausgetragenen Schüttgutes andere Abfördereinrichtungen bekannter Bauweisen treten können. Auch ist es möglich, weitere Abfördereinrichtungen anzubringen, sofern dies im jeweiligen Einsatzfall des Silos oder Bunkers im Rahmen umfangreicherer Anlagen erforderlich erscheint.

## Patentansprüche

1. Gleitrahmen (7) zur Abförderung von Schüttgut aus einem Silo oder Bunker (1) mit rechteckiger oder runder Grundfläche, bestehend aus einer äußeren Rahmenbegrenzung (8) und dazwischenliegenden, in regelmäßigen Abständen angeordneten Quersprossen (9), die mindestens parallel zu einer Rahmenseite liegen, wobei sich unter oder am Rande des Silo- oder Bunkerbodens Abfördereinheiten, wie z.B. Schneckenförderer (2) und (3), befinden,
***dadurch gekennzeichnet, daß***
der Gleitrahmen (7) auf dem Bunkerboden verschoben wird mittels eines unterhalb des Silos oder Bunkers zentral angeordneten Motors (10) mit darauf angebrachter Antriebsscheibe (12) und darauf exzentrisch befestigtem Antriebsbotzen (13) der in ein mittig angeordnetes Lager in einer mittleren Sprosse des Gleitrahmens (7) hineinragt, so daß sich der Gleitrahmen (7) auf dem Siloboden gleitend um den Antriebsbolzen frei drehen kann.

2. Gleitrahmen gemäß Anspruch 1,
***dadurch gekennzeichnet, daß***
die Länge und Breite des Gleitrahmens sowie die Exzentrizität des Antriebsbolzens (13) gegenüber der Motorachse so bemessen sind, daß die bei Drehung der Antriebsscheibe (12) nacheinander den benachbarten Wänden des Silos oder Bunkers (1) nahekommenden äußeren Kanten des Gleitrahmens (7) zwangsläufig einen Abstand zu den Wänden einhalten, der ein vorgegebenes geringes Abstandsmaß (15) nicht unterschreitet.

3. Gleitrahmen (7) zur Abförderung von Schüttgut nach Anspruch 2,
***dadurch gekennzeichnet, daß***
die Rahmenbegrenzung (8) und die Quersprossen (9) keilförmigen oder rechteckigen Querschnitt aufweisen.

4. Gleitrahmen (7) zur Abförderung von Schüttgut nach Anspruch 2,
***dadurch gekennzeichnet, dass***
das Abstandsmaß (15) zwischen den äußeren Kanten des Gleitrahmens (7) und den benachbarten Wänden des Silos oder Bunkers (1) nicht kleiner ist als die maximale Partikelgröße des zu fördernden Schüttguts.

5. Gleitrahmen (7) zur Abförderung von Schüttgut gemäß Anspruch 2,
***dadurch gekennzeichnet, daß***
die Ecken (16) des Gleitrahmens (7) abgerundet sind mit einem Radius, der, in Abhängigkeit von der Größe des Gleitrahmens (7), vorzugsweise nicht kleiner als 50 mm und nicht größer als 160 mm ist.

6. Gleitrahmen (7) zur Abförderung von Schüttgut gemäß Anspruch 2,
***dadurch gekennzeichnet, daß***
das Verhältnis von Länge zu Breite des Gleitrahmens (7) nicht größer ist als 1,4.

7. Gleitrahmen (7) zur Abförderung von Schüttgut gemäß Anspruch 2,
***dadurch gekennzeichnet, daß***
der Abstand zwischen den Quersprossen (9) des Gleitrahmens (7) nicht größer ist als das Zweifache des Abstands zwischen dem Zentrum der Antriebsscheibe (12) und dem Antriebsbolzen (13) zuzüglich der Breite einer Quersprosse.

8. Gleitrahmen (7) zur Abförderung von Schüttgut gemäß Anspruch 2,
***dadurch gekennzeichnet, daß***
der Abstand zwischen dem Zentrum der Antriebsscheibe (12) und dem Antriebsbolzen (13) sowie die Bohrung im Gleitrahmen (7), in die der Antriebsbolzen (13) eingreift, so gewählt, bzw. angeordnet werden, dass der Vektor der Kräfte, die von der Antriebseinheit (10) über den Antriebsbolzen (13) auf den Gleitrahmen (7) ausgeübt werden, stets hinter den Punkt weist, an dem Berührungen zwischen der in Drehrichtung vorderen Gleitrahmenecke (16) und der benachbarten Wand des Silos oder Bunkers (1) auftreten können.

## Claims

1. Slide frame (7) for the conveyance of bulk material from a silo or bunker (1) with a rectangular or round base area, comprising an outer frame limitation (8) and between this, arranged at regular intervals, cross rails (9) which are at least parallel to one side of the frame, there being conveying units, e.g. screw conveyors (2) and (3), below or at the edge of the silo- or bunker base,
***characterised in that***
the slide frame (7) is moved on the bunker base by means of a motor (10) centrally arranged below the silo or bunker with a driving pulley (12) mounted thereon and eccentrically fixed thereto a driving pin (13) which protrudes into a centrally arranged bearing in a middle rail of the slide frame (7) so that the slide frame (7) sliding on the bunker base can be freely rotated around the driving pin.

2. Slide frame according to claim 1,
***characterised in that***
the length and width of the slide frame as well as the eccentricity of the driving pin (13) in relation to the motor axis are dimensioned so that the outer edges of the slide frame (7) successively approaching the adjacent walls of the silo or bunker (1) during rotation of the driving pulley (12) necessarily maintain a distance from the walls which does not fall below a given small measured distance (15).

3. Slide frame (7) for the conveyance of bulk material according to claim 2,
***characterised in that***
the frame limitation (8) and the cross rails (9) have a wedge-form or rectangular cross-section.

4. Slide frame (7) for the conveyance of bulk material according to claim 2,
**characterised in that**
the measured distance (15) between the outer edges of the slide frame (7) and the adjacent walls of the silo or bunker (1) is not less than the maximum particle size of the bulk material conveyed.

5. Slide frame (7) for the conveyance of bulk material according to claim 2,
***characterised in that***
the corners (16) of the slide frame (7) are rounded with a radius which, dependent on the size of the slide frame (7), is preferably not less than 50 mm and not greater than 160 mm.

6. Slide frame (7) for the conveyance of bulk material according to claim 2,
***characterised in that***
the ratio of length to width of the slide frame (7) is not greater than 1.4.

7. Slide frame (7) for the conveyance of bulk material according to claim 2,
***characterised in that***
the distance between the cross rails (9) of the slide frame (7) is not greater than twice the distance between the centre of the driving pulley (12) and the driving pin (13) plus the width of a cross rail.

8. Slide frame (7) for the conveyance of bulk material according to claim 2,
**characterised in that**
the distance between the centre of the driving pulley (12) and the driving pin (13), as well as the drilling in the slide frame (7) in which the driving pin (13) engages, are selected or arranged so that the vector of the forces exerted by the driving unit (10) on the slide frame (7) by way of the driving pin (13) always points behind the spot at which contact can occur between the forward slide frame corner (16) in the direction of rotation and the adjacent wall of the silo or bunker (1).

## Revendications

1. Châssis de glissement (7) destiné à l'enlèvement de produit en vrac entreposé dans un silo ou dans un bunker (1) avec surface de base rectangulaire ou ronde, composé d'une limite extérieure de châssis (8) et, en intermédiaire, de traverses (9) disposées à intervalles réguliers et au moins parallèles à un côté du châssis, avec des unités de transport, telles que p.ex. des transporteurs à vis (2) et (3), situés sous ou sur le côté du fond du silo ou du bunker,
***caractérisé** de la manière suivante*:
que le châssis de glissement (7) soit déplacé sur le fond du bunker par un moteur (10) placé en position centrale au-dessous du silo ou du bunker, avec une poulie d'entraînement (12) fixée dessus et un doigt d'entraînement (13) fixé dessus en position excentrique pénètrant dans un palier placé en position centrale dans une traverse du milieu du châssis de glissement (7), de telle manière que le châssis de glissement (7) puisse tourner librement autour du doigt d'entraînement en glissant sur le sol du silo.

2. Châssis de glissement selon la spécification 1,
***caractérisé** de la manière suivante*:
que la longueur et la largeur du châssis de glissement ainsi que l'excentricité du doigt d'entraînement (13) soit calculées de telle manière, par rapport à l'axe du moteur, que les bords extérieurs du châssis de glissement (7) se rapprochant l'un après l'autre des parois voisines du silo ou du bunker (1) lors de la rotation de la poulie d'entraînement (12) conservent inévitablement une distance avec les parois qui ne soit pas inférieure à un faible intervalle (15) prescrit.

3. Châssis de glissement (7) destiné à l'enlèvement de produit en vrac selon la spécification 2,
***caractérisé** de la manière suivante*:
que la limite du châssis (8) et les traverses (9) présentent une section transversale en forme de coin ou rectangulaire.

4. Châssis de glissement (7) destiné à l'enlèvement de produit en vrac selon la spécification 2,
***caractérisé** de la manière suivante*:
que l'intervalle (15) entre les bords extérieurs du châssis de glissement (7) et les parois voisines du silo ou du bunker (1) ne soit pas inférieur à la dimension maximale des particules du produit en vrac à enlever.

5. Châssis de glissement (7) destiné à l'enlèvement de produit en vrac selon la spécification 2,
***caractérisé** de la manière suivante*:
que les coins (16) du châssis de glissement (7) soient arrondis avec un rayon qui, en fonction de la dimension du châssis de glissement (7), ne soit pas de préférence inférieur à 50 mm ni supérieur à 160 mm.

6. Châssis de glissement (7) destiné à l'enlèvement de produit en vrac selon la spécification 2,
***caractérisé** de la manière suivante*:
que le rapport de la longueur à la largeur du châssis de glissement (7) ne soit pas supérieur à 1,4.

7. Châssis de glissement (7) destiné à l'enlèvement de produit en vrac selon la spécification 2,
***caractérisé** de la manière suivante*:
que l'intervalle entre les traverses (9) du châssis de glissement (7) ne soit pas supérieur au double de la distance entre le centre de la poulie d'entraînement (12) et le doigt d'entraînement (13) avec en sus la largeur d'une traverse.

8. Châssis de glissement (7) destiné à l'enlèvement de produit en vrac selon la spécification 2,
***caractérisé** de la manière suivante*:
que l'intervalle entre le centre de la poulie d'entraînement (12) et le doigt d'entraînement (13), ainsi que le perçage dans le châssis de glissement (7) dans lequel le doigt d'entraînement (13) s'engrène, soit choisi ou bien disposé de telle manière, que le vecteur des forces qui sont exercées par l'unité d'entraînement (10) sur le châssis de glissement (7) par l'intermédiaire du doigt d'entraînement (13) soit toujours orienté derrière le point sur lequel des contacts pourraient se produire, entre le coin avant du châssis de glissement (16) dans le sens de rotation et la paroi voisine du silo ou du bunker (1).
